# EUROPEAN PATENT APPLICATION

(11) **EP 3 933 570 A1**
(43) Date of publication of application: **05.01.2022**
(21) Application number: 21158588.0
(22) Date of filing: 23.02.2021
(51) Int. Cl.: G06F 3/16, G10L 15/22, G06N 20/00

(54) **METHOD AND APPARATUS FOR CONTROLLING A VOICE ASSISTANT, AND COMPUTER-READABLE STORAGE MEDIUM**

(30) Priority: 30.06.2020 CN 202010621486
(71) Applicant: Beijing Xiaomi Pinecone Electronics Co., Ltd., Beijing 100085 (CN)
(72) Inventor: ZHOU, Can, Beijing, 100085 (CN); WEN, Meng, Beijing, 100085 (CN); LU, Xiaochuang, Beijing, 100085 (CN)
(74) Representative: Gevers Patents

(57) **Abstract**

Provided are a method and apparatus for speech assistant control and a computer-readable storage medium. The method includes: after a speech assistant is waken up, displaying a target interface corresponding to a control instruction corresponding to received speech data; when the target interface is different from an interface of the speech assistant, displaying a speech reception identifier in the target interface and controlling to continuously receive speech data; determining, based on second speech data received when the target interface is displayed, whether a target control instruction to be executed is included in the second speech data; and displaying an interface corresponding to the target control instruction when the target control instruction is included in the second speech data.

## Description

### TECHNICAL FIELD

The present disclosure relates to the technical field of artificial intelligence, and more particularly, to a method and apparatus for speech assistant control, and a computer-readable storage medium.

### BACKGROUND

More and more intelligent devices apply a speech assistant to realize speech control of the intelligent devices by users. In related art, a user can make a terminal device perform a corresponding operation by transmitting speech to a speech assistant. However, in the related art, a terminal device usually can receive data within a short time after a conversation between a user and itself. The speech assistant needs to be waken up again when the short time is exceeded. The terminal device usually may directly exit the speech assistant when jumping from the speech assistant to an interface of other application than the speech assistant. That is, the user cannot realize control through the speech assistant when another application is activated.

### SUMMARY

To overcome the problems in the related art, the present disclosure provides a method and apparatus for speech assistant control, and a computer-readable storage medium.

According to a first aspect of an embodiment of the present disclosure, a method for speech assistant control is provided, which includes:
displaying, according to a control instruction corresponding to received speech data, a target interface corresponding to the control instruction after waking up a speech assistant;
displaying a speech reception identifier in the target interface and controlling to continuously receive speech data, in response to the target interface being different from an interface of the speech assistant;
determining whether a target control instruction to be executed is included in received second speech data based on the second speech data received in a displaying process of the target interface; and
displaying an interface corresponding to the target control instruction in response to the target control instruction being included in the second speech data.

Optionally, the displaying an interface corresponding to the target control instruction may include:
displaying a window interface in the target interface in response to there is the window interface corresponding to the target control instruction.

Optionally, the method may further include:
closing the window interface in response to a display duration of the window interface reaching a target duration.

Optionally, the determining whether a target control instruction to be executed is included in received second speech data based on the second speech data may include:
performing speech recognition on the second speech data to obtain text information corresponding to the second speech data;
matching the text information with instructions in an instruction library; and
in response to a target instruction matched with the text information being determined and the text information meeting an instruction execution condition, determining that the target control instruction is included in the speech data.

Optionally, the instruction execution condition may include at least one of following conditions:
voiceprint features corresponding to the text information are the same as voiceprint features of last speech data;
voiceprint features corresponding to the text information are voiceprint features of a target user; and
semantic features between the text information and text information corresponding to last speech data are continuous.

Optionally, the method may further include:
in response to the target control instruction being included in the second speech data, displaying text information corresponding to the second speech data at a position corresponding to the speech reception identifier.

Optionally, the method may further include:
displaying a speech waiting identifier in the target interface and monitoring a wake-up word or a speech hot word in response to determining the speech assistant meeting a sleep state;
displaying the speech reception identifier in the target interface in response to detecting the wake-up word; and
executing a control instruction corresponding to the speech hot word in response to detecting the speech hot word.

Determining that the speech assistant meets the sleep state may be based on at least one of following situations:
the target control instruction is not included in the speech data received in a first preset time period; and
no speech data is received in a second preset time period, a duration of the second preset time period being longer than that of the first preset time period.

Optionally, before determining based on the received second speech data whether the target control instruction to be executed is included in the second speech data, the method may further include:
acquiring detection information of a terminal, the detection information being configured for determining whether a user sends speech to the terminal;
determining whether the received second speech data is speech data sent by the user to the terminal based on the detection information; and
in response to determining that the second speech data is speech data sent by the user to the terminal, determining whether the target control instruction to be executed is included in the second speech data based on the received second speech data.

Optionally, the determining whether the received second speech data is speech data sent by the user to the terminal based on the detection information may include:
when the detection information is rotation angle information of the terminal, determining that the second speech data is speech data sent by the user to the terminal in response to determining that a distance between a microphone array of the terminal and a speech data source is reduced based on the rotation angle information of the terminal; and
when the detection information is face image information, performing gaze estimation based on the face image information, and determining that the second speech data is speech data sent by the user to the terminal in response to determining that a gaze point corresponding to the face image information is at the terminal based on the gaze estimation.

According to a second aspect of an embodiment of the present disclosure, an apparatus for speech assistant control is provided, which includes:
a first display module, configured to display, according to a control instruction corresponding to received speech data, a target interface corresponding to the control instruction after a speech assistant is waken up;
a control module, configured to display a speech reception identifier in the target interface and control to continuously receive speech data, in response to the target interface being different from an interface of the speech assistant;
a first determination module, configured to determine whether a target control instruction to be executed is included in received second speech data based on the second speech data received in a displaying process of the target interface; and
a second display module, configured to display an interface corresponding to the target control instruction in response to the target control instruction being included in the second speech data.

Optionally, the second display module may be configured to:
display a window interface in the target interface in response to there is the window interface corresponding to the target control instruction.

Optionally, the apparatus may further include:
a closing module, configured to close the window interface in response to a display duration of the window interface reaching a target duration.

Optionally, the first determination module may further include:
a recognition sub-module, configured to perform speech recognition on the second speech data to obtain text information corresponding to the second speech data;
a matching sub-module, configured to match the text information with instructions in an instruction library; and
a first determination sub-module, configured to, in response to a target instruction matched with the text information being determined and the text information meeting an instruction execution condition, determine that the target control instruction is included in the speech data.

Optionally, the instruction execution condition may include at least one of following conditions:
voiceprint features corresponding to the text information are the same as voiceprint features of last speech data;
voiceprint features corresponding to the text information are voiceprint features of a target user; and
semantic features between the text information and text information corresponding to last speech data are continuous.

Optionally, the apparatus may further include:
a third display module, configured to, in response to the target control instruction being included in the second speech data, display text information corresponding to the second speech data at a position corresponding to the speech reception identifier.

Optionally, the apparatus may further include:
a processing module, configured to display a speech waiting identifier in the target interface and monitor a wake-up word or a speech hot word in response to determining the speech assistant meeting a sleep state;
a fourth display module, configured to display the speech reception identifier in the target interface in response to detecting the wake-up word; and
an execution module, configured to execute a control instruction corresponding to the speech hot word in response to detecting the speech hot word.

Determining that the speech assistant meets the sleep state may be based on at least one of following situations:
the target control instruction is not included in speech data received in a first preset time period; and
no speech data is received in a second preset time period, a duration of the second preset time period being longer than that of the first preset time period.

Optionally, the apparatus may further include:
an acquisition module, configured to, before the first determination module determines whether the target control instruction to be executed is included in the second speech data based on the received second speech data, acquire detection information of a terminal, the detection information being configured for determining whether a user sends speech to the terminal; and
a second determination module, configured to determine whether the received second speech data is speech data sent by the user to the terminal based on the detection information.

The first determination module may be configured to determine, based on the received second speech data, whether the target control instruction to be executed is included in the second speech data, in response to determining that the second speech data is speech data sent by the user to the terminal.

Optionally, the second determination module may include:
a second determination sub-module, configured to, when the detection information is rotation angle information of the terminal, determine that the second speech data is speech data sent by the user to the terminal in response to determining that a distance between a microphone array of the terminal and a speech data source is reduced based on the rotation angle information of the terminal; and
a third determination sub-module, configured to, when the detection information is face image information, perform gaze estimation based on the face image information, and determine that the second speech data is speech data sent by the user to the terminal in response to determining that a gaze point corresponding to the face image information is at the terminal based on the gaze estimation.

According to a third aspect of an embodiment of the present disclosure, an apparatus for speech assistant control is provided, which includes:
a processor; and
a memory configured to store instructions executable by the processor.

The processor may be configured to:
display, according to a control instruction corresponding to received speech data, a target interface corresponding to the control instruction after waking up the speech assistant;
display a speech reception identifier in the target interface and controlling to continuously receive speech data, in response to the target interface being different from an interface of the speech assistant;
determine whether a target control instruction to be executed is included in received second speech data based on the second speech data received in a displaying process of the target interface; and
display an interface corresponding to the target control instruction in response to the target control instruction being included in the second speech data.

According to a fourth aspect of an embodiment of the present disclosure, a computer-readable storage medium is provided. The computer-readable storage medium stores computer program instructions that, when executed by a processor, implement the operations of the method for speech assistant control provided by the first aspect of the present disclosure.

The technical solutions provided by the embodiments of the present disclosure may include the following beneficial effects.

In the above technical solution, after a speech assistant is waken up, according to a control instruction corresponding to received speech data, a target interface corresponding to the control instruction is displayed. In response to the target interface being different from an interface of the speech assistant, a speech reception identifier is displayed in the target interface, and speech data is controlled to be continuously received. Then, based on received second speech data in a displaying process of the target interface, it is determined whether a target control instruction to be executed is included in the second speech data, and an interface corresponding to the target control instruction is displayed in response to the target control instruction being included in the second speech data. Through the above technical solution, interfaces of other applications can be displayed during interaction with the speech assistant, and the speech assistant can continuously receive speech data in the process of displaying the interfaces of other applications, so that corresponding operations can be executed in the interfaces of other applications through the speech assistant. Meanwhile, speech data can be continuously received in the displaying process of the target interface, so that repeated waking-up operations are not needed for a user. Convenience for a user to use the speech assistant and the use experience are improved. In addition, operations can be carried out through the speech assistant when the target interface is displayed, so that the comprehensive control based on a graphical user interface and a speech user interface can be realized, the execution path of operations carried out by a user can be effectively shortened, and the operations of the user can be simplified.

It should be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flowchart of a method for speech assistant control according to an exemplary embodiment.
FIG. 2 to FIG. 6 are schematic diagrams of a target interface according to an exemplary embodiment.
FIG. 7 is a block diagram of an apparatus for speech assistant control according to an exemplary embodiment.
FIG. 8 is a block diagram of an apparatus for speech assistant control according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

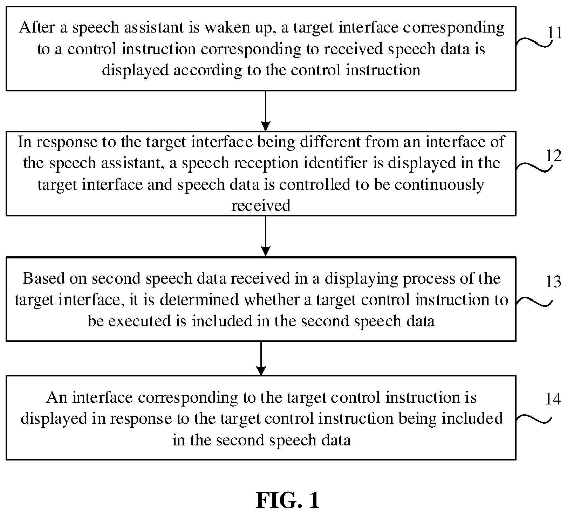

FIG. 1 is a flowchart of a method for speech assistant control according to an exemplary embodiment. As shown in FIG. 1, the method may include the following operations.

In operation 11, after a speech assistant is waken up, a target interface corresponding to a control instruction corresponding to received speech data is displayed according to the control instruction.

In an example, a speech assistant may be waken up by an existing technology of detecting a wake-up word, such as by pre-recording speech data about a wake-up word and then training a wake-up word detection model to enable speech from a user to be detected in real time by the wake-up word detection model. The speech assistant can be waken up when it is determined that the speech from the user includes the wake-up word. In another example, the speech assistant may be waken up by clicking a speech assistant icon or button, which is not limited in the present disclosure.

After the speech assistant is waken up, the speech assistant may receive speech from a user, so that speech data received by the speech assistant may be analyzed to determine a corresponding control instruction. The method provided by the present disclosure may be applied to a terminal device with a display interface. After the speech assistant is waken up, speech data sent by the user may be received in an displaying process of an interface corresponding to the speech assistant, so that speech recognition may be performed on the speech data, text information corresponding to the speech data may be obtained, and a control instruction included in the text information may be further determined. Therefore, a target interface corresponding to the control instruction may be displayed.

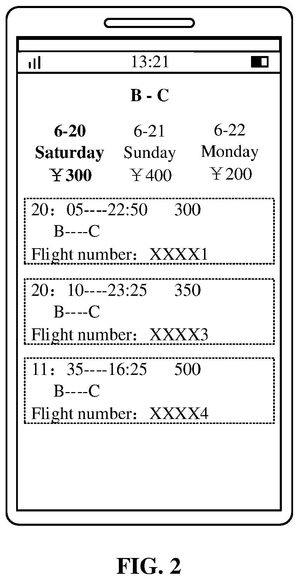

In an example, a user sends a speech "Please open application A to reserve an airline ticket from B city to C city tomorrow" in an interface corresponding to a speech assistant, and in response to a control instruction corresponding to the speech data, a target interface, namely an inquiry interface for the airline ticket from B city to C city tomorrow in the application A, may be displayed. The date corresponding to tomorrow may be calculated by obtaining the current time of the terminal. As shown in FIG. 2, a schematic diagram of a target interface is shown.

In operation 12, in response to the target interface being different from an interface of the speech assistant, a speech reception identifier is displayed in the target interface, and speech data is controlled to be continuously received. In an example, the speech data may be continuously received based on a full duplex technology.

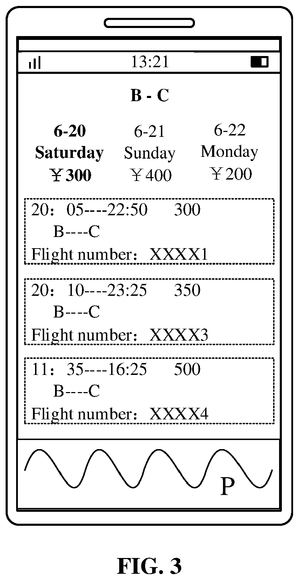

In related art, a terminal device usually directly exits the speech assistant when jumping from the speech assistant to an interface of other application than the speech assistant. That is, a user cannot realize control through the speech assistant when other applications are activated. In the embodiment of the present disclosure, when the target interface is different from the interface of the speech assistant, that is, when the scene of jumping to other applications during interaction with the speech assistant take place, a speech reception identifier may be displayed in the target interface and controlled continuous reception of speech data may be achieved, i.e., the speech assistant may be controlled to be continuously in an operating state. In an example, in order to fit a user's needs for use and avoid the target interface from being covered by a speech reception identifier as much as possible, the speech reception identifier may be displayed in the lower portion of the target interface. The transparency of the speech reception identifier may be adjusted by a user to meet the user's requirements for page displaying. In an example, the speech reception identifier may be a static or dynamic picture identifier, and as shown at P in FIG. 3, may be displayed at the borderline in the lower portion of the target interface, i.e., the speech reception identifier coincides with the lower boundary of the target interface. FIG. 3 is merely an exemplary display mode, for example, the display position and size of the speech reception identifier may be set according to an actual application scene or a setting instruction of a user. The present disclosure is not limited thereto.

In this operation, displaying the speech reception identifier in the target interface may prompt a user that speech still can be sent at present for corresponding control by the speech assistant, and may avoid the speech assistant from being repeatedly waken up by the user by continuously receiving speech data.

Meanwhile, an operation instruction of the user may be received in the target interface, for example, an operation that the user views flights in the target interface in a sliding mode, so that the inquired flight information may be displayed in the target interface in a sliding mode in response to the operation instruction of the user.

In operation 13, based on second speech data received in a displaying process of the target interface, it is determined whether a target control instruction to be executed is included in the second speech data.

In the present embodiment, user data may be continuously received during the displaying process of the target interface to complete the interaction between a user and the speech assistant. Therefore, the received second speech data may include ambient sound data, such as speech data of a user's conversation with another user, and speech data of other users. In this operation, whether a target control instruction to be executed is included in the second speech data may be determined by analyzing the received second speech data, so that the impact of ambient sound data can be removed from the received speech data, and the accuracy of the method for speech assistant control is improved.

In operation 14, an interface corresponding to the target control instruction is displayed in response to the target control instruction being included in the second speech data.

In the above technical solution, after a speech assistant is waken up, according to a control instruction corresponding to received speech data, a target interface corresponding to the control instruction may be displayed. In response to the target interface being different from an interface of the speech assistant, a speech reception identifier may be displayed in the target interface and speech data may be controlled to be continuously received. Then, based on received second speech data in a displaying process of the target interface, it may be determined whether a target control instruction to be executed is included in the second speech data, and an interface corresponding to the target control instruction may be displayed in response to the target control instruction being included in the second speech data. Through the above technical solution, an interface of another application can be displayed during interaction between the user and the speech assistant, and the speech assistant may continuously receive speech data in the process of displaying the interface of another application, so that corresponding operations can be executed in the interface of another application through the speech assistant. Meanwhile, speech data may be continuously received in the displaying process of the target interface, so that repeated waking-up operations are not needed to be executed by a user, convenience for the user to use the speech assistant and the use experience of the user are improved. In addition, operations can be carried out through the speech assistant in the displaying process of the target interface, so that the comprehensive control based on a graphical user interface and a speech user interface can be realized, the execution path of the operations carried out by the user can be effectively shortened, and the operations of the user can be simplified.

In order to enable those skilled in the art to better understand the technical solutions provided by the embodiments of the present disclosure, the above operations are described in detail below.

Optionally, in operation 13, an exemplary implementation manner of determining, based on received second speech data, whether the target control instruction to be executed is included in the second speech data is as follows. The operation may include:

speech recognition is performed on the second speech data to obtain text information corresponding to the second speech data; and

the text information is taken to match with instructions in an instruction library according to the text information.

In an example, the text information may be obtained through speech recognition by an automatic speech recognition (ASR) technology. Then, fuzzy matching can be carried out on the instructions in the instruction library and the text information based on the text information. Matching can be carried out in an instruction matching mode commonly used in the related art, and detailed description is not repeated.

In response to a target instruction matched with the text information being determined and the text information meeting an instruction execution condition, it is determined that the target control instruction is included in the speech data.

In an example, when a target instruction matched with the text information is determined and the text information meets instruction execution conditions, parameters corresponding to the target instruction may be determined by analyzing the text information, so that a target control instruction can be determined. For example, when speech data sent by a user is "play ABC song", the target instruction determined by matching with instructions in the instruction library may be playing song, and then a parameter corresponding to the target instruction may be determined to be ABC song by analyzing the text information, thereby generating a target control instruction to play the ABC song.

Herein, as described above, in the embodiment of the present disclosure, the continuous reception of speech data can be controlled during the displaying of the target interface, and therefore, an instruction actually to be executed needs to be determined from the received speech data. Therefore, according to the above technical solution, a target instruction corresponding to second speech data may be determined by analyzing the second speech data, meanwhile, whether the target instruction is an instruction actually needed to be executed may be determined by determining whether the text information meets the instruction execution condition, so as to provide data support for accurately determining the target control instruction. Meanwhile, the impact of an instruction in the ambient sound data on the accuracy of the method for speech assistant control can be effectively avoided, thereby ensuring the accuracy of the method for speech assistant control.

Optionally, the instruction execution condition may include at least one of following conditions.

First condition: voiceprint features corresponding to the text information are the same as voiceprint features of last speech data.

The last speech data is speech data corresponding to a last control instruction executed by the speech assistant. In an example, the voiceprint features of the second speech data may be extracted when the second speech data is received, so that the voiceprint features of the second speech data may be compared with the voiceprint features of the last speech data. If the voiceprint features are matched with the voiceprint features of the last speech data, then the speech data and the last speech data are sent out by the same user. In this case, it may be determined that the text information meets the instruction execution condition, so that the impact of a speech sent by other users can be avoided.

Second condition: voiceprint features corresponding to the text information are voiceprint features of a target user.

The target user may be a master user of a terminal device, or may be the master user and other preset legal users. In this embodiment, the voiceprint features of the target user may be pre-recorded and extracted to store the voiceprint features of the target user. After receiving the second speech data, the voiceprint features of the second speech data may be directly extracted and compared with the voiceprint features of the target user. If the voiceprint features matched with the voiceprint features of the second speech data exist in the voiceprint features of the target user, it is indicated that the second speech data is sent by the target user. In this case, it may be determined that the text information meets the instruction execution condition, so that the impact of speech sent by other users can be avoided.

Third condition: semantic features between the text information and text information corresponding to last speech data are continuous.

A user usually interacts with a speech assistant in the same scene, i.e. a speech from a user is usually continuous contextual information. Therefore, in this embodiment, a semantic feature judgment model may be trained in advance based on training sentences with continuous semantic features through a natural language processing (NLP) method, so that the text information corresponding to the second speech data and the text information corresponding to the last speech data may be input into the semantic feature judgment model after the text information corresponding to the second speech data is determined. Therefore, whether the semantic features between the text information and the text information corresponding to the last speech data are continuous or not can be determined. When the semantic features of the two are determined to be continuous based on the semantic feature judgment model, it represents that the text information corresponding to the second speech data is subsequent to the text information of the last speech data and that the target instruction corresponding to the second speech data is an actual instruction sent by a user to a speech assistant. In this case, the text information may be determined to meet the instruction execution condition so as to ensure the accuracy of the determined target control instruction.

In an example, the multiple instruction execution conditions described above may be determined comprehensively. An instruction execution condition may be determined to be satisfied when the instruction execution condition includes multiple conditions and the multiple conditions are simultaneously satisfied.

Therefore, through the technical solution, it can be determined whether the target instruction can be executed through the voiceprint feature corresponding to the text information or the semantic feature corresponding to the text information, so that the target instruction determined from the second speech data can be further verified, a real target operation instruction for speech assistant control can be determined, the accuracy of the speech assistant control can be further guaranteed, and the use experience is improved.

In a practical application scenario, since user data may be continuously received in the embodiment of the present disclosure, in order to reduce the volume of data to be processed and ensure the execution efficiency of the method for speech assistant control, the present disclosure also provides the following embodiments.

Optionally, before the operation 13 of determining, based on received second speech data, whether the target control instruction to be executed is included in the second speech data, the method may further include:
acquiring detection information of a terminal, the detection information being configured for determining whether a user sends speech to the terminal; and
determining whether the received second speech data is speech data sent by the user to the terminal based on the detection information.

In a practical application scenario, when a user interacts through a speech assistant, speech is usually sent to the terminal. Therefore, in this embodiment, whether the second speech data is speech data sent to the terminal by the user can be determined through detection information of the terminal.

In response to determining that the second speech data is not speech data sent by the user to the terminal, it is indicated that the second speech data is ambient sound data rather than data for performing interaction with the speech assistant. In this case, it may not be necessary to parse the second speech data.

In response to determining that the second speech data is speech data sent by the user to the terminal, the operation 13 of determining, based on the received second speech data, whether the target control instruction to be executed is included in the second speech data is executed.

Therefore, through the technical solution, the second speech data may be preliminarily judged in advance. When the second speech data is determined to be the speech data sent by the user to the terminal, namely the data used for interacting with the speech assistant, the second speech data can be analyzed, so that the volume of speech data to be processed by the speech assistant can be effectively reduced, and resource waste caused by analyzing ambient sound data is avoided. Meanwhile, the accuracy of subsequent operations of the speech assistant and real-time responses can be guaranteed.

Optionally, an exemplary implementation manner of determining whether the received second speech data is speech data sent by the user to the terminal based on the detection information is as follows. The operation may include:
when the detection information is rotation angle information of the terminal, determining that the second speech data is speech data sent by the user to the terminal in response to determining that a distance between a microphone array of the terminal and a speech data source is reduced based on the rotation angle information of the terminal.

In an example, an angular velocity at which the terminal rotates can be detected by a gyroscope, and then the rotation angle information of the terminal can be determined by integrating the angular velocity. Whether the second speech data is speech data sent by the user to the terminal may be determined by determining a distance between a microphone array of the terminal and a source of speech data during this rotation. In an example, the change in the distance between the microphone array and the speech data source to which the speech data corresponds may be determined based on the rotation angle and the position of the microphone array in the terminal. When the distance between the microphone array and the speech data is reduced during rotation of the terminal, it indicates that the user rotates the terminal to enable the terminal to get closer to the user. In this case, the second speech data may be determined to be the speech data sent by the user to the terminal. When the distance between the microphone array and the speech data becomes larger, it indicates that the user rotates the terminal to enable the terminal to get far away from the user, that is, the user no longer interacts with the speech assistant in the terminal.

In an example, movement information of the terminal may also be acquired using an accelerometer. When the distance between the terminal and the speech data source is determined to be reduced based on the movement information, the second speech data is determined to be the speech data sent by the user to the terminal.

When the detection information is face image information, gaze estimation may be performed based on the face image information, and it may be determined that the second speech data is speech data sent by the user to the terminal in response to determining that a gaze point corresponding to the face image information is at the terminal based on the gaze estimation.

In an example, the face image information may be acquired through a camera device in the terminal, then face recognition and face key point extraction may be carried out, and then a gaze point corresponding to a face in the face image information may be determined through a gaze estimation technology. When the gaze point is at the terminal, it indicates that a user is looking at the terminal. In this case, it may be determined that the second speech data is the speech data sent by the user to the terminal.

Therefore, through the above technical solution, it can be determined whether second speech data is speech data sent by a user to a terminal by acquiring detection information of the terminal, so that data actually sent to the speech assistant can be directly and quickly determined, technical support can be provided for subsequently reducing the data volume of analysis of speech data, the impact of ambient sound data on the method for speech assistant control can be effectively avoided, and the use requirement of the user is met.

Optionally, a user who sends speech data to a terminal may be determined based on a method for speaker orientation by a microphone array in a voiceprint recognition technology. When there are many people's speeches in a user's area given by the microphone array, a user who is actually sending speech to the terminal may be determined by blind source separation. The orientation method and the blind source separation technology are the conventional art and will not be described in detail herein.

Optionally, in operation 14, displaying an interface corresponding to the target control instruction in response to the target control instruction being included in the second speech data may include the following embodiments.

For determining an interface corresponding to the target control instruction, an application corresponding to the target control instruction may be determined firstly. If multiple applications corresponding to the target control instruction exist in the terminal, for example, multiple music players exist in the terminal when the target control instruction is to play a ABC song, then a default application for playing music in the terminal may be determined to be the application corresponding to the target control instruction, or an application that is most frequently used when the user plays music may be determined as the application corresponding to the target control instruction. Then, after the application corresponding to the target control instruction is determined, the interface corresponding to the target control instruction can be determined from the interface of the application.

As an example, when the interface corresponding to the target control instruction is determined, if the determined interface and the target interface belong to an interface in a same application, the interface corresponding to the target control instruction may be directly displayed. If the determined interface and the target interface do not belong to an interface in a same application, the determined interface may be displayed in an application to which the determined interface belongs after the current application is jumped to the application to which the determined interface belongs.

As another example, an exemplary implementation manner of displaying the interface corresponding to the target control instruction is as follows. The operation may include:
under the condition that there is a window interface corresponding to the target control instruction, the window interface is displayed in the target interface.

In an example, window interfaces may be set in advance for multiple instructions, such as a calculator and weather, and a window interface corresponding relationship may be stored. In an actual use scenario, a user only needs to know weather or a result of calculated data, and does not need to jump to a corresponding application for viewing. Therefore, in this embodiment, an instruction corresponding to a window interface may be set in advance. When the interface corresponding to the instruction is displayed, the window interface may be displayed, i.e., the window interface is displayed in the currently displayed target interface. The window interface is located on the upper layer of the target interface. In an example, the size of the window interface is smaller than the size of the target interface.

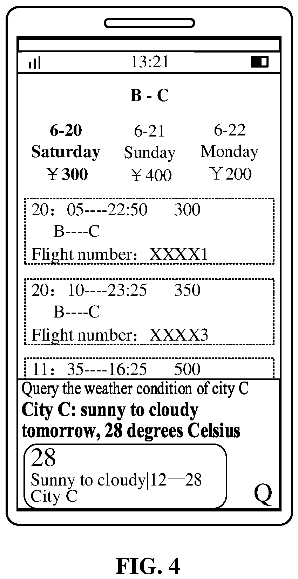

Therefore, in response to the target control instruction being determined to be included in the second speech data, it may be firstly queried whether there is a window interface corresponding to the target control instruction according to the window interface corresponding relationship. In an example, in the target interface shown in FIG. 3, if a user wants to know the weather condition of city C, a speech "query the weather condition of city C" may be sent out. When the speech assistant determines a target control instruction for querying the weather based on the speech data, it may be queried whether a window interface corresponding to the target control instruction exists according to the window interface corresponding relationship. When it is determined that the window interface corresponding to the target control instruction exists, a window interface corresponding to the weather query result may then be displayed in the target interface for the airline ticket query, as shown at Q in FIG. 4.

Therefore, through the above technical solution, a window interface corresponding to the target control instruction can be displayed in a currently displayed target interface. A result may be prompted to a user without switching between applications. The use requirement of a user can be met, a response delay caused by switching between applications can be effectively avoided, and the use experience can be further improved.

Optionally, the method may further include:
the window interface is closed in response to a display duration of the window interface reaching a target duration.

In an example, the target duration may be set according to the actual usage scenario, which is not limited by the present disclosure. Through the above technical solution, a window interface can be displayed in a current target interface, so that the operation result of the speech assistant can be provided for a user, and meanwhile, the window interface can be closed after being viewed by the user to avoid interfering with the user's operation on the target interface. Therefore, a user can be prompted conveniently, inconvenience in use caused by application switching can be effectively avoided, convenience in operating a currently displayed target interface by a user can be guaranteed, and use experience is improved.

Optionally, when an application is indicated in a target control instruction corresponding to the received second speech data, a current application may be switched to the indicated application to display an interface corresponding to the target control instruction, so that an execution result of the target control instruction can be displayed.

Optionally, the method may further include:
in response to the target control instruction being included in the second speech data, text information corresponding to the second speech data is displayed at a position corresponding to the speech reception identifier.

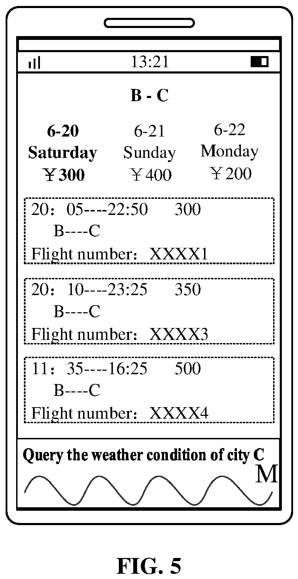

The manner of determining whether the target control instruction is included in the second speech data has been described in detail above and will not be described in further detail herein. In the example described above, in the target interface shown in FIG. 3, a user sends a speech "query weather conditions of city C". When the speech assistant determines a target control instruction for querying weather based on the speech data, text information may be displayed at a position corresponding to a speech reception identifier, as shown at M in FIG. 5. After determining a query result, the query result is displayed through a window interface, as shown at Q in FIG. 4. Therefore, on one hand, a speech sent by the speech assistant can be prompted to a user, so that the user can conveniently determine whether the target control instruction executed by the speech assistant is accurate or not; on the other hand, the speech of the user can be responded before the interface corresponding to the target control instruction is displayed, so that the real-time performance of human-computer interaction is improved, and the user can use the speech assistant conveniently. In addition, compared with the related art of displaying all speech data, in response to the target control instruction being included in the second speech data, text information corresponding to the second speech data may be displayed at a position corresponding to the speech reception identifier in the present disclosure, a user can experience more accurate interaction and the accuracy of speech assistant control is improved.

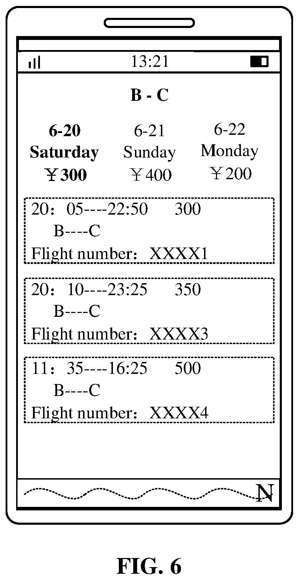

Optionally, the method may further include:
displaying the speech waiting identifier in the target interface and monitoring a wake-up word or a speech hot word when the speech assistant meets a sleep state. The wake-up word and the speech hot word can be detected in a manner similar to the wake-up word detection described above, and further description thereof will be omitted. The display images corresponding to the speech waiting identifier and the speech reception identifier are different, as shown at N in FIG. 6. The size and position corresponding to the speech waiting identifier and the speech reception identifier may be the same or different, and the present disclosure is not limited thereto.

It may be determined that the speech assistant meets the sleep state based on at least one of following situations:
the target control instruction is not included in the received speech data in a first preset time period; and
no speech data is received in a second preset time period, a duration of the second preset time period being longer than that of the first preset time period.

The duration of the first preset time period and the second preset time period may be set according to an actual use scenario. In an example, the duration of the first preset time period may be set to 10 minutes, and the duration of the second preset time period may be set to 20 minutes. Then, in a possible embodiment, the target control instruction is not included in the received speech data within the first preset time period, it may be determined that the speech assistant satisfies the sleep state, that is, the target control instruction is not determined from the speech data received within 10 minutes after the execution of the last target control instruction. It indicates that the current user no longer interacts with the speech assistant, and it may be determined that the speech assistant satisfies the sleep state.

In another possible example, no speech data is received within the second preset time period. It may be determined that the speech assistant satisfies the sleep state, that is, the no speech data is received within 20 minutes after the execution of the last target control instruction. It indicates that the current user no longer interacts with the speech assistant, and it may be determined that the speech assistant satisfies the sleep state.

Therefore, when it is determined that a user no longer interacts with the speech assistant, the speech assistant may be controlled to enter the sleep state, so that resources and energy consumption occupied by the speech assistant can be effectively saved.

Then, in response to detecting the wake-up word, the speech reception identifier is displayed in the target interface. That is, the speech assistant is waken up when the wake-up word is detected, and the speech reception identifier is displayed in the target interface for continuously receiving speech data.

A control instruction corresponding to the speech hot word is executed under the condition that the speech hot word is detected. The speech hot word may be used for waking up the speech assistant. Meanwhile, the speech hot word also includes a control instruction. When the speech hot word is detected, the speech assistant may be directly waken up, a control instruction corresponding to the speech hot word may be executed, and a speech reception identifier may be displayed in the target interface for continuously receiving speech data.

In another embodiment, in order to further reduce the resources and energy consumption occupied by the speech assistant, when it is determined that the speech assistant satisfies the sleep state, the speech assistant may directly quit, and then the speech assistant may be waken up by detecting a wake-up word. The detailed implementation manner has been described above and will not be described in detail herein.

Therefore, through the above technical solution, a speech assistant can be controlled to sleep in response to determining that a user does not interact with the speech assistant any longer, so that resources and energy consumption occupied by the speech assistant can be effectively saved. A speech waiting identifier is displayed in the target interface to prompt that the speech assistant is in a sleep state, so that a user can activate the speech assistant through speech hot words later and can use the speech assistant conveniently. The use process is simplified, thereby further improving user experience.

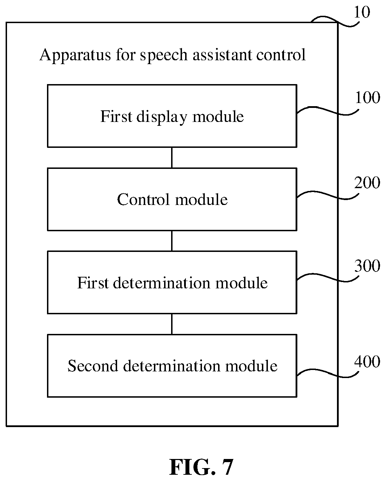

The present disclosure also provides an apparatus for speech assistant control. As shown in FIG. 7, the apparatus 10 includes: a first display module 100, a control module 200, a first determination module 300, and a second display module 400.

The first display module 100 is configured to, according to a control instruction corresponding to received speech data, display a target interface corresponding to the control instruction after a speech assistant is waken up.

The control module 200 is configured to, in response to the target interface being different from an interface of the speech assistant, display a speech reception identifier in the target interface and control to continuously receive speech data.

The first determination module 300 is configured to, based on received second speech data in a displaying process of the target interface, determine whether a target control instruction to be executed is included in the second speech data.

The second display module 400 is configured to display an interface corresponding to the target control instruction in response to the target control instruction being included in the second speech data.

Optionally, the second display module is configured to:
in response to there is a window interface corresponding to the target control instruction, display the window interface in the target interface.

Optionally, the apparatus may further include:
a closing module, configured to close the window interface in response to a display duration of the window interface reaching a target duration.

Optionally, the first determination module may further include:
a recognition sub-module, configured to perform speech recognition on the second speech data to obtain text information corresponding to the second speech data;
a matching sub-module, configured to match the text information with instructions in an instruction library; and
a first determination sub-module, configured to, in response to a target instruction matched with the text information being determined and the text information meeting an instruction execution condition, determine that the target control instruction is included in the speech data.

Optionally, the instruction execution condition may include at least one of following conditions:
voiceprint features corresponding to the text information are the same as voiceprint features of last speech data;
voiceprint features corresponding to the text information are voiceprint features of a target user; and
semantic features between the text information and text information corresponding to last speech data are continuous.

Optionally, the apparatus may further include:
a third display module, configured to, in response to the target control instruction being included in the second speech data, display text information corresponding to the second speech data at a position corresponding to the speech reception identifier.

Optionally, the apparatus may further include:
a processing module, configured to display a speech waiting identifier in the target interface and monitor a wake-up word or a speech hot word when the speech assistant meets a sleep state;
a fourth display module, configured to display a speech reception identifier in the target interface in response to detecting the wake-up word; and
an execution module, configured to execute a control instruction corresponding to the speech hot word in response to detecting the speech hot word.

It may be determined that the speech assistant meets the sleep state based on at least one of following situations:
the target control instruction is not included in the received speech data in a first preset time period; and
no speech data is received in a second preset time period, a duration of the second preset time period being longer than that of the first preset time period.

Optionally, the apparatus may further include:
an acquisition module, configured to, before the first determination module determines whether the target control instruction to be executed is included in the second speech data based on received second speech data, acquire detection information of a terminal, the detection information being configured for determining whether a user sends speech to the terminal; and
a second determination module, configured to determine whether the received second speech data is speech data sent by the user to the terminal based on the detection information.

The first determination module is configured to determine, based on received second speech data, whether the target control instruction to be executed is included in the second speech data is executed, in response to determining that the second speech data is speech data sent by the user to the terminal.

Optionally, the second determination module may include:
a second determination sub-module, configured to, when the detection information is rotation angle information of the terminal, determine that the second speech data is speech data sent by the user to the terminal in response to determining that a distance between a microphone array of the terminal and a speech data source is reduced based on the rotation angle information of the terminal; and
a third determination sub-module, configured to, when the detection information is face image information, perform gaze estimation based on the face image information, and determine that the second speech data is speech data sent by the user to the terminal in response to determining that a gaze point corresponding to the face image information is at the terminal based on the gaze estimation.

With regard to the apparatus in the above embodiments, the specific manner in which the respective modules perform the operations has been described in detail in the embodiment relating to the method, and will not be explained in detail herein.

The present disclosure also provides a computer-readable storage medium. The computer-readable storage medium stores computer program instructions that, when executed by a processor, implement the operations of the method for speech assistant control provided by the present disclosure.

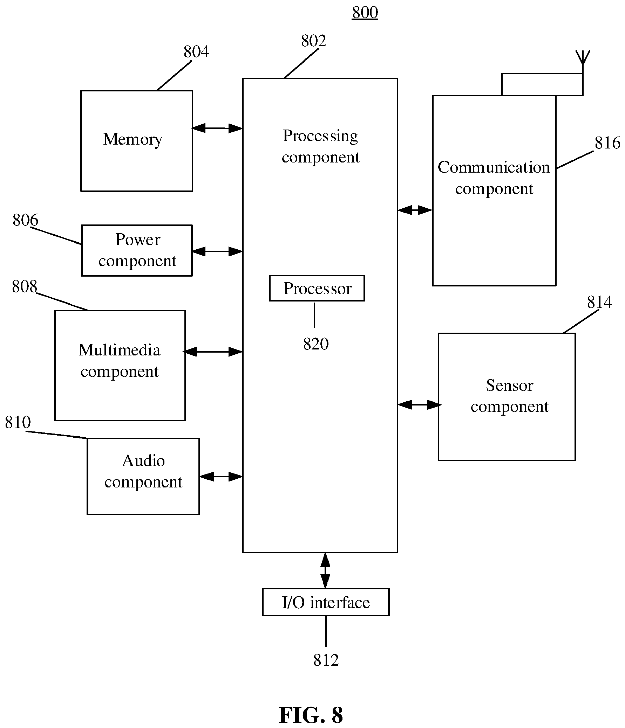

FIG. 8 is a block diagram of an apparatus 800 for speech assistant control according to an exemplary embodiment. For example, the apparatus 800 may be a mobile phone, a computer, a digital broadcast terminal, a messaging device, a gaming console, a tablet, a medical device, exercise equipment, a personal digital assistant, and the like.

Referring to FIG. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or part of the operations in the above described method for speech assistant control. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 808 includes a front camera and/or a rear camera. The front camera and the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the apparatus 800 is in an operation mode, such as a call mode, a recording mode, and a speech recognition mode. The received audio signal may be further stored in the memory 804 or transmitted via the communication component 816. In some embodiments, the audio component 810 may further include a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For example, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect presence of an object nearby without any physical contact. The sensor component 814 may also include a light sensor, such as a complementary metal oxide semiconductor (CMOS) or charge coupled device (CCD) image sensor, configured for use in an imaging application. In some embodiments, the sensor component 814 may also include an acceleration sensor, a gyroscope sensor, a magnetic sensor, a pressure sensor or a temperature sensor.

The communication component 816 is configured to facilitate communication, wired or wirelessly, between the apparatus 800 and other devices. The apparatus 800 may access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In an exemplary embodiment, the communication component 816 may further include a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 804, executable by the processor 820 in the apparatus 800, for performing the above-described method for speech assistant control. For example, the non-transitory computer-readable storage medium may be a ROM, a random access memory (RAM), a CD-ROM, a magnetic tape, a floppy disc, an optical data storage device and the like.

In another exemplary embodiment, a computer program product is further provided. The computer program product includes a computer program that can be executed by a programmable apparatus, and the computer program has a code part for performing the above method for speech assistant control when executed by the programmable apparatus.

Other embodiments of the present disclosure will be apparent to those skilled in the art from consideration of the specification and practice of the present disclosure. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for speech assistant control, **characterized by** the method comprising:
displaying (11), according to a control instruction corresponding to received speech data, a target interface corresponding to the control instruction after waking up a speech assistant;
displaying (12) a speech reception identifier in the target interface and controlling to continuously receive speech data, in response to the target interface being different from an interface of the speech assistant;
determining (13) whether a target control instruction to be executed is included in received second speech data based on the second speech data received in a displaying process of the target interface; and
displaying (14) an interface corresponding to the target control instruction in response to the target control instruction being included in the second speech data.

2. The method according to claim 1, wherein the displaying an interface corresponding to the target control instruction comprises:
displaying a window interface in the target interface in response to there is the window interface corresponding to the target control instruction.

3. The method according to claim 2, further comprising:
closing the window interface in response to a display duration of the window interface reaching a target duration.

4. The method according to claim 1, wherein the determining whether a target control instruction to be executed is included in received second speech data based on the second speech data comprises:
performing speech recognition on the second speech data to obtain text information corresponding to the second speech data;
matching the text information with instructions in an instruction library; and
in response to a target instruction matched with the text information being determined and the text information meeting an instruction execution condition, determining that the target control instruction is included in the speech data.

5. The method according to claim 4, wherein the instruction execution condition comprises at least one of following conditions:
voiceprint features corresponding to the text information are the same as voiceprint features of last speech data;
voiceprint features corresponding to the text information are voiceprint features of a target user; and
semantic features between the text information and text information corresponding to last speech data are continuous.

6. The method according to claim 1, further comprising:
in response to the target control instruction being included in the second speech data, displaying text information corresponding to the second speech data at a position corresponding to the speech reception identifier.

7. The method according to claim 1, further comprising:
displaying a speech waiting identifier in the target interface and monitoring a wake-up word or a speech hot word in response to determining the speech assistant meeting a sleep state;
displaying the speech reception identifier in the target interface in response to detecting the wake-up word; and
executing a control instruction corresponding to the speech hot word in response to detecting the speech hot word,
wherein determining that the speech assistant meets the sleep state is based on at least one of following situations:
the target control instruction is not included in speech data received in a first preset time period; and
no speech data is received in a second preset time period, a duration of the second preset time period being longer than that of the first preset time period.

8. The method according to claim 1, wherein before the determining whether a target control instruction to be executed is included in received second speech data based on the second speech data, the method further comprises:
acquiring detection information of a terminal, the detection information being configured for determining whether a user sends speech to the terminal;
determining whether the received second speech data is speech data sent by the user to the terminal based on the detection information; and
in response to determining that the second speech data is speech data sent by the user to the terminal, determining whether the target control instruction to be executed is included in the second speech data based on the received second speech data.

9. The method according to claim 8, wherein the determining whether the received second speech data is speech data sent by the user to the terminal based on the detection information comprises:
when the detection information is rotation angle information of the terminal, determining that the second speech data is speech data sent by the user to the terminal in response to determining that a distance between a microphone array of the terminal and a speech data source is reduced based on the rotation angle information of the terminal; and
when the detection information is face image information, performing gaze estimation based on the face image information, and determining that the second speech data is speech data sent by the user to the terminal in response to determining that a gaze point corresponding to the face image information is at the terminal based on the gaze estimation.

10. An apparatus (10) for speech assistant control, **characterized by** the apparatus comprising:
a first display module (100), configured to display, according to a control instruction corresponding to received speech data, a target interface corresponding to the control instruction after a speech assistant is waken up;
a control module (200), configured to display a speech reception identifier in the target interface and control to continuously receive speech data, in response to the target interface being different from an interface of the speech assistant;
a first determination module (300), configured to determine whether a target control instruction to be executed is included in received second speech data based on the second speech data received in a displaying process of the target interface; and
a second display module (400), configured to display an interface corresponding to the target control instruction in response to the target control instruction being included in the second speech data.

11. An apparatus for speech assistant control, comprising:
a processor; and
a memory configured to store instructions executable by the processor,
wherein the processor is configured to:
display, according to a control instruction corresponding to received speech data, a target interface corresponding to the control instruction after waking up a speech assistant;
display a speech reception identifier in the target interface and controlling to continuously receive speech data, in response to the target interface being different from an interface of the speech assistant;
determine whether a target control instruction to be executed is included in received second speech data based on the second speech data received in a displaying process of the target interface; and
display an interface corresponding to the target control instruction in response to the target control instruction being included in the second speech data.

12. A computer-readable storage medium, storing computer program instructions that, when executed by a processor, implement the operations of the method according to any one of claims 1 to 9.
